**Europäisches Patentamt**

**European Patent Office**

**Office européen des brevets**

(19)

(11) Veröffentlichungsnummer: **0 029 616**
**B1**

(12) **EUROPÄISCHE PATENTSCHRIFT**

(45) Veröffentlichungstag der Patentschrift:
20.07.83

(51) Int. Cl.³: **B 62 D 1/04**

(21) Anmeldenummer: **80200913.4**

(22) Anmeldetag: **29.09.80**

(54) **Einspeichen-Lenkrad.**

(30) Priorität: **23.11.79 DE 2947197**

(43) Veröffentlichungstag der Anmeldung:
**03.06.81 Patentblatt 81/22**

(45) Bekanntmachung des Hinweises auf die Patenterteilung:
**20.07.83 Patentblatt 83/29**

(84) Benannte Vertragsstaaten:
**DE FR GB IT SE**

(56) Entgegenhaltungen:
**DE-A-2 100 437**
**FR-A-1 151 080**

(73) Patentinhaber: **KARL SCHMIDT GMBH,
Christian-Schmidt-Strasse 8/12 Postfach 1351,
D-7107 Neckarsulm (DE)**

(72) Erfinder: **Bauer, Wolfgang, Ing. Grad., Weizheimer
Strasse 5, D-8757 Karlstein (DE)**
Erfinder: **Grosser, Werner, Hauptstrasse 26,
D-8751 Sulzbach (DE)**

(74) Vertreter: **Fischer, Ernst, Dr., Reuterweg 14,
D-6000 Frankfurt am Main 1 (DE)**

Einspeichen-Lenkrad

Die Erfindung betrifft ein Einspeichen-Lenkrad, das mit einer Kunststoffschicht ummantelt ist und bei dem Lenkradnabe sowie die in der Mittelebene verlaufende Lenkradspeiche einteilig aus einer Aluminiumlegierung gegossen sind, und der aus Stahl bestehende Lenkradkranz im Bereich der Lenkradspeiche ebenfalls mit der Aluminiumlegierung einteilig umgossen ist.

Bekannt sind Einspeichen-Lenkräder, bei denen das über die obere Lagerung der Lenksäule hinausragende, in der senkrechten Mittelebene des Lenkrades nach unten abgebogene Ende unter Bildung der Speiche mit dem Lenkradkranz verbunden ist. Der Nachteil dieses Lenkrades ist, dass nicht nur der Einbau der Signalanlage, sondern auch das Anbringen von als Aufprallschutz dienenden Energieabsorptionselementen ausgesprochen schwierig ist.

Im Einsatz befinden sich auch Einspeichen-Lenkräder, deren Nabe aus einer Stahlscheibe besteht, an die die aus Stahldraht oder Stahlrohr bestehende Speiche angeschweisst ist. Durch schweissen ist auch die Speiche mit dem Lenkradkranz verbunden. Abgesehen davon, dass die Herstellung der Schweissverbindungen eine zeitgemässe Fertigung von Lenkrädern beeinträchtigt, ist für die Herstellung der Schweissverbindung ein nicht unbeachtlicher Aufwand erforderlich.

In der DE-A2 Nr. 100437 ist ein mit einer Kunststoffschicht ummanteltes Einspeichen-Lenkrad vorgesehen, das zwecks ausreichend hoher Festigkeit in einer Guss Stahlring-Konstruktion angefertigt ist, wobei Lenkradnabe und die in der Mittelebene verlaufende Lenkradspeiche einteilig aus einer Aluminiumlegierung gegossen sind und der aus Stahl bestehende Lenkradkranz im Bereich der Lenkradspeiche ebenfalls mit der Aluminiumlegierung einteilig umgossen ist. Die Herstellung dieses Lenkrades erfolgt in zwei Schritten im Kokillengiessverfahren und ist somit mit einem relativ grossen Aufwand verbunden.

Es ist die Aufgabe der vorliegenden Erfindung, ein Einspeichen-Lenkrad zu entwickeln, das mit vergleichsweise verringertem Aufwand herstellbar ist, ohne dass die gute ästhetische Wirkung beeinträchtigt wird wobei bei einem Zusammenstoss des Fahrzeugs die aus einem Lenkradaufprall resultierende Verletzungsgefahr für den Fahrzeugführer möglichst gering sein soll.

Die Lösung dieser Aufgabe besteht in einem Einspeichen-Lenkrad, bei dem erfindungsgemäss in die gegenüber dem Lenkradkranz tiefer gelegte Lenkradnabe sowie in die Lenkradspeiche eine Stahlverstärkung eingegossen ist, Lenkradnabe, Lenkradspeiche und der Umguss des Lenkradkranzes aus einem Druckgussteil gebildet sind und die Druckgussschicht im Bereich der Verbindung des Lenkradkranzes mit der Lenkradspeiche mit Kerben versehen ist. Die Kerben bilden Sollbruchstellen, damit die Lenkradspeiche bei einem Aufprall oder Zusammenstoss des Fahrzeugs die durch den Kraftfahrzeugführer ausgeübten Kräfte aufnehmen kann.

Die Speiche kann durch zwei Drähte, Streifen oder Rohre gebildet sein, deren lenkradkranzseitig abgebogene Enden vorzugsweise in den Enden des im Bereich der senkrechten Mittelebene unterbrochenen Lenkradkranzes befestigt sind.

Eine Ausgestaltung des erfindungsgemässen Einspeichen-Lenkrades ist darin zu sehen, dass die Enden des in der senkrechten Mittelebene unterbrochenen Lenkradkranzes so ausgebildet sind, dass diese unter Bildung der Lenkradspeiche nach innen abgebogen und die aus Druckguss gefertigte Lenkradnabe eingegossen sind. Vorzugsweise können beide Drähte, Streifen oder Rohre über einen aus Druckguss bestehenden Steg miteinander verbunden sein.

Die die Lenkradspeiche bildenden Drähte, Streifen oder Rohre sind parallel oder V-förmig zueinander verlaufend eingeordnet.

Das erfindungsgemäss gestaltete Einspeichen-Lenkrad ist in den Zeichnungen beispielhaft dargestellt und wird nachfolgend erläuternd beschrieben:

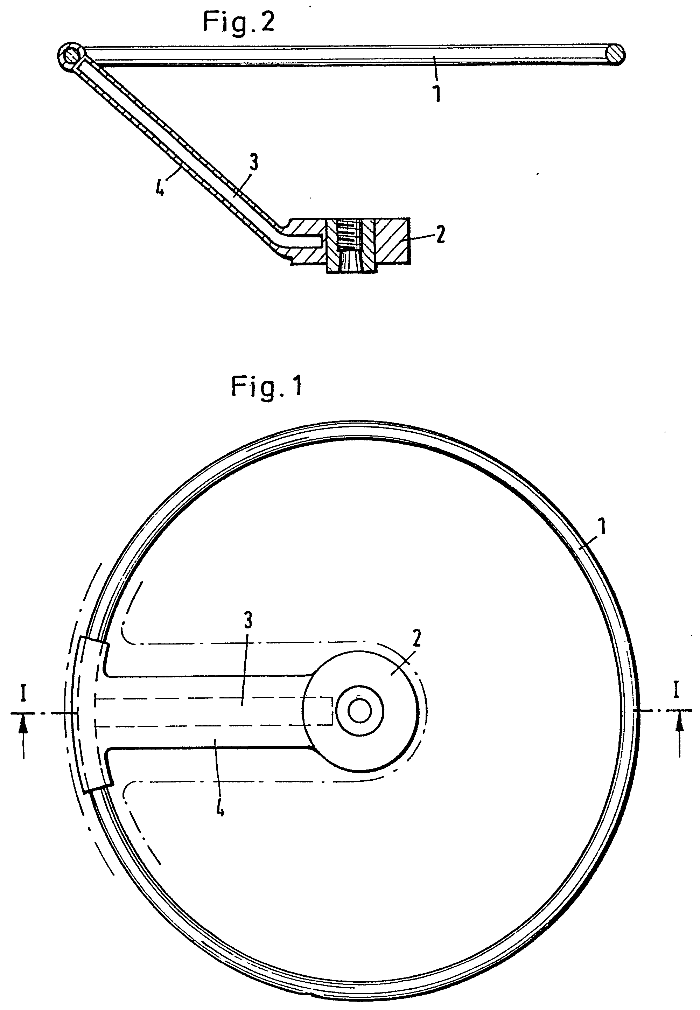

Das in Fig. 1 in Draufsicht dargestellte Einspeichen-Lenkrad, von dem in Fig. 2 ein Längsschnitt entlang der Schnittlinie I-I wiedergegeben ist, besteht aus der gegenüber dem aus Stahldraht bestehenden Lenkradkranz 1 versenkt angeordneten, im Druckgussverfahren hergestellten Lenkradnabe 2 und dem in dieser eingegossenen Stahldraht 3, der ebenso wie die Umgebung der Verbindungsstelle des Stahldrahts 3 mit dem Lenkradkranz 1 mit einer Druckgussschicht 4 umgossen ist. Der Stahldraht ist mit dem Lenkradkranz verschweisst.

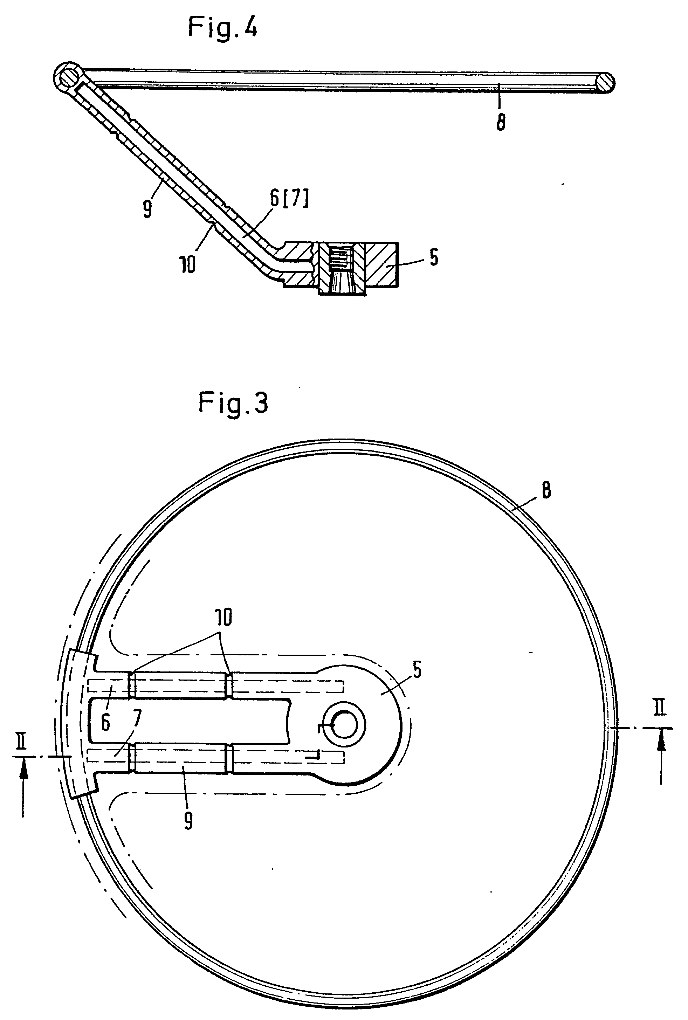

In Fig. 3 ist eine Draufsicht auf ein Einspeichen-Lenkrad wiedergegeben, von dem die Fig. 4 einen Schnitt entlang der Schnittlinie II-II darstellt. Die Lenkradspeiche besteht aus zwei in die aus Druckguss bestehende Lenkradnabe 5 eingegossenen, parallel zueinander verlaufenden Stahldrähten 6, 7, die ebenso wie die Umgebung ihrer Verbindung mit dem Lenkradkranz 8 mit einer Druckgussschicht 9 mit Kerben 10 umgeben sind.

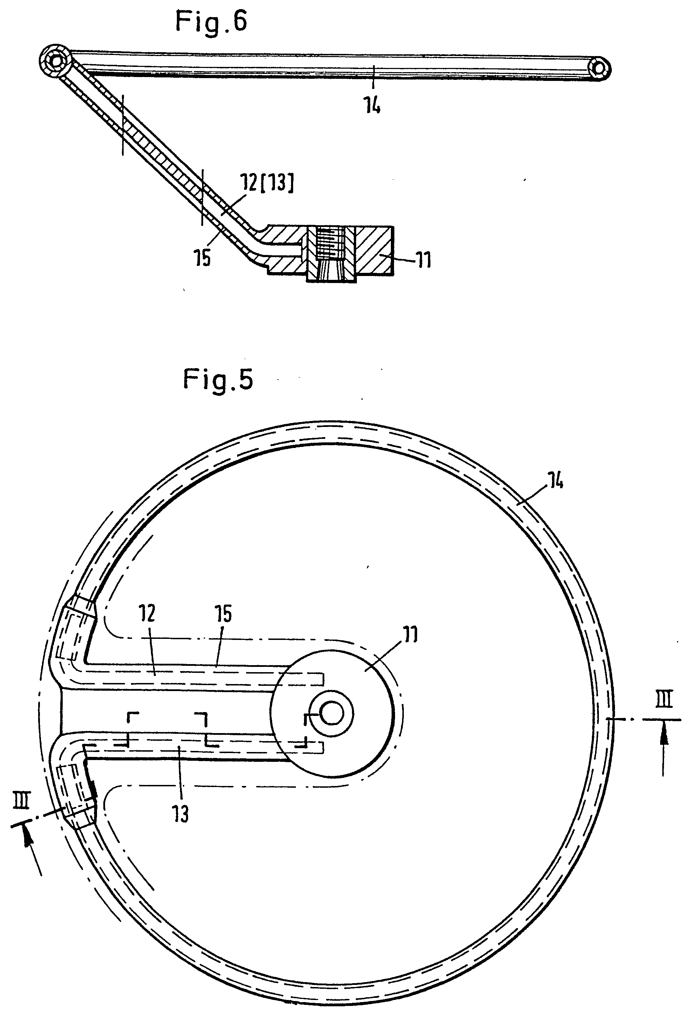

In Fig. 5 ist eine Draufsicht und in Fig. 6 ein Schnitt entlang der Schnittlinie III-III der Fig. 5 dargestellt. Die lenkradseitigen Enden der in die aus Druckguss bestehende Lenkradnabe 11 eingegossenen Stahldrähte 12, 13 sind zum in der senkrechten Mittelebene unterbrochenen Lenkradkranz 14 hin abgebogen und im Lenkradkranzrohr befestigt. Die Stahldrähte 12, 13 sowie ihr Verbindungsbereich mit dem Lenkradkranz 14 sind mit einer Druckgussschicht 15 umhüllt.

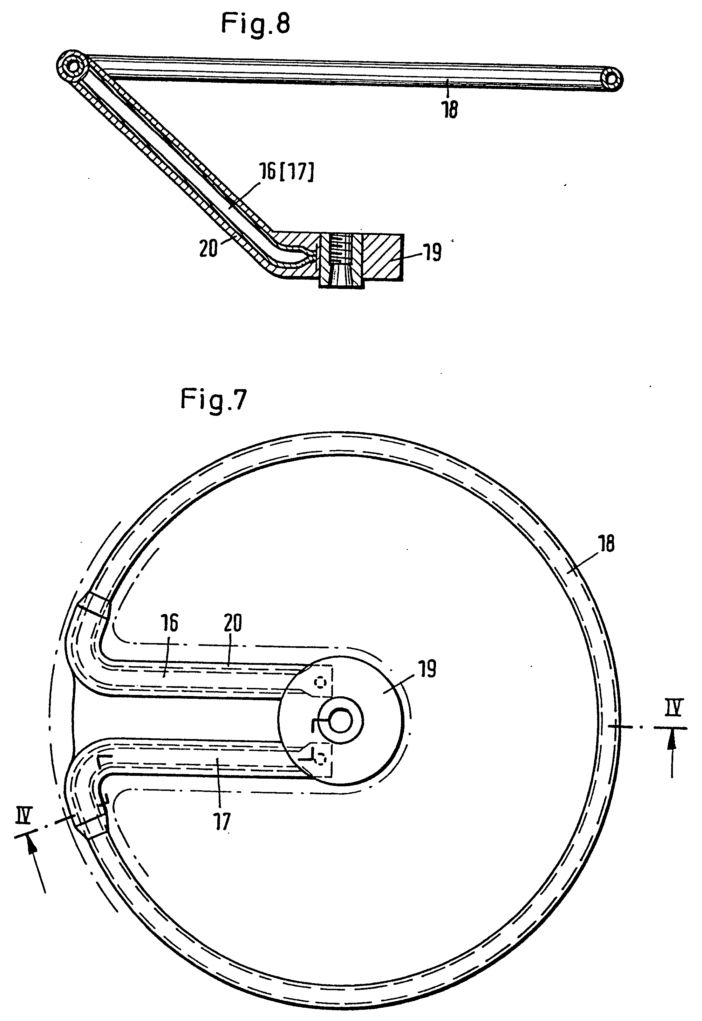

Bei dem in Fig. 7 in Draufsicht dargestellten Einspeichen-Lenkrad, von dem Fig. 8 einen Schnitt entlang der Schnittlinie IV-IV wiedergibt, sind die Enden 16, 17 des in der senkrechten Mittelebene unterbrochenen Lenkradkranzrohres 18 in der Weise nach innen abgebogen, dass sie unter Bildung einer Speiche parallel zueinander verlaufend in die aus Druckguss hergestellte Lenkradnabe 19 eingegossen und mit einer Druckgussschicht 20 umgossen sind.

## Patentansprüche

1. Einspeichen-Lenkrad, das mit einer Kunststoffschicht ummantelt ist und bei dem Lenkradnabe sowie die in der Mittelebene verlaufende Lenkradspeiche einteilig aus einer Aluminiumlegierung gegossen sind, und der aus Stahl bestehende Lenkradkranz im Bereich der Lenkradspeiche ebenfalls mit des Aluminiumlegierung einteilig umgossen ist, dadurch gekennzeichnet, dass in die gegenüber dem Lenkradkranz (1, 8, 14, 18) tiefer gelegte Lenkradnabe (2, 5, 11, 19) sowie in die Lenkradspeiche eine Stahlverstärkung (3, 6, 7, 12, 13, 16, 17) eingegossen ist, dass Lenkradnabe, Lenkradspeiche und der Umguss des Lenkradkranzes aus einem Druckgussteil gebildet sind, und dass die Druckgussschicht (4, 9, 15, 20) des Umgusses im Bereich der Verbindung des Lenkradkranzes mit der Lenkradspeiche mit Kerben (10) versehen ist.

2. Einspeichen-Lenkrad nach Anspruch 1, dadurch gekennzeichnet, dass die Speiche aus zwei Drähten, Streifen oder Rohre (6, 7, 12, 13, 16, 17) besteht.

3. Einspeichen-Lenkrad nach den Ansprüchen 1 und 2, dadurch gekennzeichnet, dass die lenkradkranzseitig abgebogenen Enden im Innern der Enden des im Bereich der senkrechten Mittelebene unterbrochenen Lenkradkranzrohres (14) befestigt sind.

4. Einspeichen-Lenkrad nach den Ansprüchen 1 und 2, dadurch gekennzeichnet, dass die Enden (16, 17) des in der senkrechten Mittelebene unterbrochenen Lenkradkranzes (18) so ausgebildet sind, dass diese unter Bildung der Lenkradspeiche nach innen abgebogen und in die Lenkradnabe (19) eingegossen sind.

5. Einspeichen-Lenkrad nach den Ansprüchen 2 bis 4, dadurch gekennzeichnet, dass die die Speiche bildenden beiden Drähte, Streifen oder Rohre über einen aus Druckguss bestehenden Steg miteinander verbunden sind.

6. Einspeichen-Lenkrad nach einem oder mehreren der Ansprüche 1 bis 5, dadurch gekennzeichnet, dass die die Speiche bildenden Drähte, Streifen oder Rohre parallel oder V-förmig zueinander verlaufend angeordnet sind.

## Claims

1. A one-spoke steering wheel which is covered by a layer of plastic material and at which the steering-wheel hub and the steering-wheel spoke, which extends in the vertical center plane of the steering wheel, are cast in one piece of an aluminium alloy, which is cast around the steering-wheel rim in that portion to which the spoke is connected, characterized in that a reinforcement (3, 6, 7, 12, 13, 16, 17) of steel is cast integral in the spoke and in the hub (2, 5, 11, 19), which is lowered against the rim, and that the hub, the spoke and the recast of the rim are pressure-die cast and that the pressure-die cast layer (4, 9, 15, 20) in the portion of connection between the rim and the spoke is provided with indentations (10).

2. A steering wheel according to claim 1, characterized in that the spoke consist of two wires, strips or tubes (6, 7, 12, 13, 16, 17).

3. A steering wheel according to claims 1 and 2, characterized in that the ends of the wires, strips or tubes which are bent toward the steering-wheel rim are secured in the steering-wheel rim tube (14), which is interrupted adjacent to the vertical center plane.

4. A steering wheel according to claims 1 and 2, characterized in that the steering-wheel rim (18) is interrupted in the vertical center plane and its ends (16, 17) are bent inwardly to form the steering-wheel spoke and are cast integral in the steering-wheel hub (19).

5. A steering wheel according to claims 2 to 4, characterized in that two wires, strips or tubes are interconnected by a pressure-die cast web.

6. A steering wheel according to any of claims 1 to 5, characterized in that the wires, strips or tubes which form the spoke are parallel or arranged in a V-shaped array.

## Revendications

1. Volant de direction à rayon unique, qui est enveloppé d'une couche de matière plastique, et dans lequel le moyeu du volant ainsi que le rayon du volant qui s'étend dans le plan médian sont moulés d'une pièce avec un alliage d'aluminium, et la couronne du volant, constituée avec de l'acier, est également surmoulée d'une pièce, dans la zone du rayon du volant, avec l'alliage d'aluminium, caractérisé par le fait qu'un renforcement en acier (3, 6, 7, 12, 13, 16, 17) est moulé dans le moyeu du volant (2, 5, 11, 19), situé plus bas par rapport à la couronne du volant (1, 8, 14, 18), de même que dans le rayon du volant, que le moyeu du volant, le rayon du volant et le surmoulage autour de la couronne du volant sont constitués par un élément de moulage sous pression, et que la couche de moulage sous pression (4, 9, 15, 20) du surmoulage est pourvue d'encoches (10), au niveau de la liaison de la couronne du volant avec le rayon du volant.

2. Volant de direction à rayon unique selon la revendication 1, caractérisé par le fait que le rayon est constitué par deux fils de fer, bandes ou tubes (6, 7, 12, 13, 16, 17).

3. Volant de direction à rayon unique suivant les revendications 1 et 2, caractérisé par le fait que les extrémités coudées du côté de la couronne du volant sont fixées à l'intérieur des extrémités du tube de couronne du volant (14), interrompu au niveau du plan médian perpendiculaire.

4. Volant de direction à rayon unique selon les revendications 1 et 2, caractérisé par le fait que les extrémités (16, 17) de la couronne du volant (18), interrompue dans le plan médian perpendiculaire, sont conformées de telle façon que celles-ci sont coudées vers l'intérieur en formant le rayon du volant et sont moulées dans le moyeu du volant (19).

5. Volant de direction à rayon unique selon les revendications 2 à 4, caractérisé par le fait que les deux fils de fer, bandes ou tubes qui forment le rayon sont reliés entre eux par une entretoise constituée par une coulée sous pression.

6. Volant de direction à rayon unique selon une ou plusieurs des revendications 1 à 5, caractérisé par le fait que les fils de fer, bandes ou tubes qui forment le rayon sont disposés en s'étendant entre eux parallèlement ou en forme de V.

## Fig.2

## Fig. 1

0 029 616

Fig. 4

Fig. 3

7

## Fig.6

## Fig.5

## Fig.8

## Fig.7